# EUROPÄISCHE PATENTANMELDUNG

(11) **EP 1 152 625 A1**
(43) Veröffentlichungstag der Anmeldung: **07.11.2001**
(21) Anmeldenummer: 00109561.1
(22) Anmeldetag: 04.05.2000
(51) Int. Cl.: H04Q 7/34

(54) **Aktualisierung von hersteller-spezifischen Hardware-Informationen an der hersteller-unabhängigen OMC-NMC-Schnittstelle im Mobilfunk**

(71) Anmelder: SIEMENS AKTIENGESELLSCHAFT, 80333 München (DE)
(72) Erfinder: Hirsch, Lucian, 81373 München (DE)

(57) **Zusammenfassung**

Die Erfindung bezieht sich auf ein Verfahren und Kommunikationssystemeinrichtungen zur Aktualisierung von Informationen in einem objekt-orientierten, hierarchisch aufgebauten Kommunikationssystem mit zumindest zwei Verwaltungsebenen über eine hersteller-unabhängige Schnittstelle zwischen einer hersteller-unabhängigen Managereinrichtung (NMC) und zumindest einer Agenteneinrichtung (OMC), die hersteller-spezifische Hardware-Informationen zur Fehlerverwaltung erlangt und in einem ersten Zustand verarbeitet.

Zur Vermeidung der fehlenden Verarbeitung von Fehlerinformationen zu Zeiten, in denen Agenteneinrichtungen derartige Aufgaben nicht durchführen, wird vorgeschlagen, über die Schnittstelle hersteller-spezifische Hardware-Informationen in einem hersteller-unabhängigen Format zur Managereinrichtung (NMC) zu übertragen. Dies kann insbesondere im Rahmen einer neuen hersteller-unabhängigen Objektklasse (equipment-Info) erfolgen, die zur Beschaffung einer Ausstattungsinformation über die Schnittstelle definiert wird, die als Informationselemente eine Aktions-Anforderung (scanEquipment) der Managereinrichtung (NMC) an die Agenteneinrichtung (OMC) zur Anforderung der Übertragung der Hardware-Information und eine Attributswertänderungs-Übertragung für den Elementzustand (boardstatus) aufweist.

## Beschreibung

Aktualisierung von hersteller-spezifischen Hardware-Informationen an der hersteller-unabhängigen OMC-NMC-Schnittstelle im Mobilfunk

Die Erfindung betrifft ein Verfahren zur Aktualisierung von hersteller-spezifischen Hardware-Informationen an der hersteller-unabhängigen OMC-NMC-Schnittstelle im Mobilfunk gemäß den oberbegrifflichen Merkmalen des Patentanspruchs 1 bzw. ein Kommunikationssystem mit entsprechenden Einrichtungen zum Ausführen des Verfahrens.

In einem typischen Kommunikationssystem - beispielsweise einem Mobil-Kommunikationssystem - definieren die Prinzipien eines Managementnetzes, die auch als TMN-Prinzipien (TMN: Telecommunications Management Network) bezeichnet werden, mehrere Managementebenen für das Management des Kommunikationssystems, wobei jede Ebene eine doppelte Funktion aufweist, d.h. jede Ebene außer der untersten eine Manager-Funktion für die darunterliegende Ebene hat und jede Ebene außer der obersten eine Agenten-Funktion für die nächst höhere Ebene hat.

Das Fehlermanagement ("Fault Management") ist ein wichtiger Teil des TMN-Managements. In der Regel spielt in diesem Fall der Agent die aktive Rolle, indem er Fehler-Ereignisse der eigenen Managementebene rechtzeitig und genau erkennt und an den Manager der nächst höheren Ebene als Ereignisberichte bzw. sogenannte "event reports" (z.B. alarm reports) überträgt. Insbesondere wenn ein gemeldeter Fehler von der empfangenden Managerstation nicht selber behandelt werden kann, leitet diese die Fehlermeldung oder eine geeignet modifizierte Fehlermeldung an die nächst höhere Ebene weiter. Die Übertragung von Ereignisdaten vom jeweiligen Agent zum Manager ist unkritisch, solange die Bearbeitung auf einer empfangenden Ebene möglich ist und/oder der Kommunikationsmechanismus zwischen dieser Ebene und der nächst höheren Ebene funktioniert, so dass diese nächst höhere Ebene den gemeldeten Fehler weitergeleitet bekommt und bearbeiten kann.

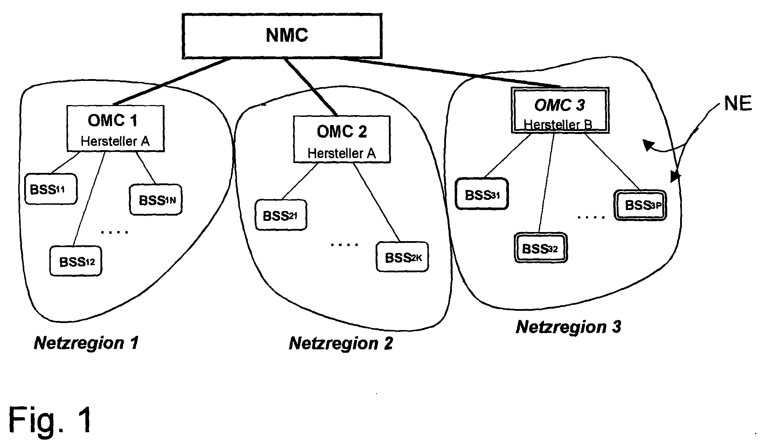

Ein gesamtes, von einem Diensteanbieter gemanagtes Telekommunikationsnetz, wie z.B. ein GSM Mobilfunk-Netz, wird aus betrieblicher Sicht in mehrere Netzregionen unterteilt, wie dies aus Fig. 1 ersichtlich ist. Die Netzregionen umfassen u.a. Element-Manager, insbesondere die Bedienungs- und Wartungszentren OMCs, die in der Regel eine Vielzahl von Basisstationssystemen BSSᵢⱼ verwalten. Eine Vielzahl von zu einem Netz zugehörigen Netzregionen wird von einem gemeinsamen sogenannten Netzmanagementzentrum NMC verwaltet. Die Verwaltung erfolgt dabei über jeweils eine Schnittstelle zwischen dem Netzmanagementzentrum NMC und den Element-Managern OMC der einzelnen Netzregionen.

Obwohl das gesamte Netz Hardware von verschiedenen Herstellern enthalten kann, werden in jeder Netzregion sowohl die Netzelemente als auch die Element-Manager OMCs vom gleichen Hersteller geliefert, da das Management am Element-Manager OMC alle hersteller-spezifischen Eigenschaften der Hardware berücksichtigen muß, d.h. auch die dazugehörigen Tests zur Überprüfung der fehlerfreien Funktion der Netzelemente.

Die Schnittstelle zwischen Netzmanagementzentrum NMC und den regionalen Element-Managern OMCs muß daher hersteller-unabhängig sein, um eine funktionale Integration hersteller-spezifischer Netzregionen unter einem einheitlichen Netzmanagementzentrum NMC zu ermöglichen. Diese Herstellerunabhängigkeit der OMC-NMC-Schnittstelle kann in einer objektorientierten Managementumgebung durch die Verwendung logischer, hier funktions-bezogener Management-Objektklassen (functional-related MOC) erfolgen. Die funktionalen Objekte modellieren die Netzressourcen eines Telekommunikationsnetzes aus einer funktionalen, hersteller-unabhängigen Sicht.

Im Gegensatz dazu, kennt die hersteller-spezifische Schnittstelle zwischen OMC und den Netzelementen NE auch sogenannte hardware-bezogene Management-Objektklassen (equipment-related MOC), die von Hersteller zu Hersteller unterschiedlich sind.

In den Hauptbetriebszeiten erfolgt die Fehlerüberwachung üblicherweise in den Element-Managern OMC. Während der Nacht, an Feiertagen und an Wochenenden wird das hier beispielhaft beschriebene Mobilfunk-Netz jedoch von dem übergeordneten Netzmanagementzentrum NMC überwacht, da die regionalen OMCs dann unbesetzt sind.

Ein optimales Netzmanagement am Netzmanagementzentrum NMC gemäß der TMN-Hierarchie auf der Netzmanagementebene würde daher voraussetzen, dass am NMC auch Informationen über die Ausstattung (Hardware) vorhanden sein müssen. Diese Informationen sollten:
a) dem NMC-Operator ermöglichen, die reale Fehlerursache nach Ausfall von Hardwarekomponenten, insbesondere Hardware-Boards zu erkennen, was vor allem wichtig ist, wenn die regionalen Element-Manager OMC unbesetzt sind und das Mobilfunk-Netz nur vom Netzmanagementzentrum NMC aus überwacht wird, und
b) dem NMC-System ermöglichen, genaue Fehlerbeschreibungen bzw. "Trouble-Tickets" zu erstellen, um entsprechende Reparaturmaßnahmen vor Ort einzuleiten.

Hier liegt ein scheinbarer Konflikt vor: einerseits muß die OMC-NMC-Schnittstelle hersteller-unabhängig sein, andererseits werden aber hersteller-spezifische Informationen am Netzmanagementzentrum NMC benötigt.

Ein erster hersteller-unabhängiger Ansatz, um Hardware-Informationen an der OMC-NMC-Schnittstelle zur Verfügung zu stellen, ist die Definition von generischen Ausstattungsübersichts-Objektklassen, sogenannten equipment summary MOCs, z.B. btsEquipment, bscEquipment, transcoderEquipment(bts: basis transceiver station, bsc: basis stations-Steuereinrichtung), welche die gesamte Hardware einer Netzeinheit modellieren. Ein solcher Ansatz hat aber den Nachteil, dass bei jeder Einführung neuer Netzeinheit-Typen, um z.B. eine neue Funktionalität in einem Mobilfunk-Netz einzuführen, das Objektmodell der OMC-NMC-Schnittstelle erweitert und die Anwendungs- bzw. Applikations-Software sowohl im Agent (OMC) als auch im Manager (NMC) geändert werden muß.

Ein Objekt entsteht allgemein als Ergebnis einer Modellierungs-Tätigkeit, bei der neben der Funktionalität u.a. die Parameter und Rahmenbedingungen definiert werden, und ist sowohl dem Manager als auch dem ausführenden Agent an der entsprechenden Schnittstelle bekannt, hier z.B. bei einem Mobilfunknetz an der Schnittstelle zwischen einem Bedienungs- und Wartungszentrum OMC und einem Netzmanagementzentrum NMC.

Der Erfindung liegt die Aufgabe zugrunde, ein Verfahren zur Aktualisierung von hersteller-spezifischen Hardware-Informationen an der multi-vendor bzw. hersteller-unabhängigen OMC-NMC-Schnittstelle im Mobilfunk bzw. ein Kommunikationssystem mit entsprechenden Einrichtungen zum Ausführen des Verfahrens bereitzustellen, bei denen die OMC-NMC-Schnittstelle einerseits hersteller-unabhängig ist und andererseits aber hersteller-spezifische Informationen am Netzmanagementzentrum NMC verfügbar gemacht werden.

Diese Aufgabe wird durch das Verfahren mit den Merkmalen des Anspruchs 1 und das Kommunikationssystem mit den Merkmalen des Anspruchs 10 gelöst.

Vorteilhafte Weiterbildungen sind Gegenstand von Unteransprüchen.

Durch das Verfahren zur Aktualisierung von Informationen werden über die Schnittstelle hersteller-spezifische Hardware-Informationen in einem hersteller-unabhängigen Format zur Managereinrichtung übertragen.

Eine hersteller-unabhängige Objektklasse zur Beschaffung einer Ausstattungsinformation über die Schnittstelle kann besonders einfach definiert werden, wenn sie als Informationselemente eine Aktions-Anforderung der Managereinrichtung an die Agenteneinrichtung zur Anforderung der Übertragung der Hardware-Information und eine Attributswertänderungs-Benachrichtigung (notification) für den Elementzustand aufweist. Mit diesen wenigen Informationen ist bereits eine Überwachung von untergeordneten Verwaltungsebenen mit Netzelementen verschiedener Hersteller möglich.

Die Attributswertänderungs-Übertragung ermöglicht eine momentane Funktionsfähigkeit eines Hardware-Netzelements, ein Einstecken, ein Entfernen und/oder einen Fehlerzustand eines Hardware-Netzelements (NE) zu modellieren, wobei vorteilhafterweise auch ein Funktionsfähigkeitszustand vor einem Fehler übertragen werden kann.

Bei der Attributswertänderungs-Übertragung ist es auch möglich, spezielle Informationen über ein Netzelement zu übertragen, so dass die Übertragung dieser Zusatzdaten ebenfalls hardware-unabhängig erfolgen kann.

Insbesondere werden dadurch auch Fehlerverwaltungen in Zeiten ermöglicht, in denen die Agenteneinrichtungen dies nicht übernehmen können.

Vorteilhafterweise kann die Übertragung von Attributwerten auf Anforderung durch die Managereinrichtung oder z.B. bei relevanten Zustandsänderungen auch von der Agenteneinrichtung automatisch erfolgen.

Insbesondere können Informationen nicht nur über Zustände in der Agenteneinheit sondern auch über Zustände in anderen Netzelementen übertragen werden, die zu der Agenteneinheit wiederum Unter-Agenteneinheiten oder deren sonstige Untereinheiten ausbilden.

Zusammengefaßt können in einem Mobilfunk-Netz, das aus physikalischen Komponenten von verschiedenen Herstellern besteht, dem übergeordneten Netzmanagementzentrum Hardware-Informationen in einem hersteller-unabhängigen Format zur Verfügung gestellt.

Neue Netzelement-Typen bzw. neue Typen von Hardware-Boards können in ein Mobilfunk-Netz jederzeit eingeführt werden, z.B. um neue Funktionalitäten wie den Paketdatendienst GPRS (General Packet Radio Service) im Mobilfunknetz zu unterstützen, ohne dass Änderungen im Bedienungs- und Wartungszentrum OMC oder Netzmanagementzentrum NMC erforderlich sind. Das Verfahren eignet sich insbesondere für GSM- als auch für UMTS-Systeme, ist aber auch bei anderen, insbesondere zukünftigen Telekommunikationssystemen und Mobilfunksystemen einsetzbar.

Nachfolgend wird ein Ausführungsbeispiel anhand der Zeichnung näher erläutert. Es zeigen:
- Fig. 1: schematisch einen Teil eines TeleKommunikationssystems,
- Fig. 2: einen Aufbau eines Containment-tree gemäß dem beschriebenen Ausführungsbeispiel,
- Fig. 3: schematisch den Ablauf der Hauptverfahrensschritte und
- Fig. 4: Informationsblöcke für drei Situationen in einem verwalteten Netz.

Das Ausführungsbeispiel beschreibt die Erfindung anhand eines beispielhaften TMN-Konzeptes (TMN: Telecommunications Management Network) für das Management eines Mobil-Kommunikationssystems, das beispielsweise Netzeinrichtungen eines Mobilfunknetzes nach dem GSM-Standard (GSM: Global System for Mobile communication) aufweist. Das Konzept ist aber nicht auf Mobilfunknetze nach insbesondere dem GSM- oder UMTS-Standard (UMTS: Universal Mobile Telecommunication System) beschränkt, sondern läßt sich auf andere Systeme, insbesondere Telekommunikationsnetze jeder Art anwenden, die eine Manager-Agent-Beziehung aufweisen.

Ein Mobil-Kommunikationssystem ist ein hierarchisch gegliedertes System verschiedener Netzeinrichtungen, bei dem die unterste Hierarchiestufe von den Mobilstationen gebildet wird. Diese Mobilstationen kommunizieren über eine Funkschnittstelle mit Funkstationen, welche die nächste Hierarchieebene bilden und als Basisstationen bezeichnet werden. Beispielsweise sind Basisstationen, die Mobilstationen in einem Funkbereich einer Funkzelle versorgen, zur Abdeckung eines größeren Funkgebiets zusammengefaßt und mit übergeordneten Netzeinrichtungen, den Basisstationssteuerungen verbunden. Die Basisstationen und Basisstationssteuerungen gehören zu einem Basisstationssystem BSS (BSS: Base Station Subsystem) des Mobil-Kommunikationssystems. Die Basisstationssteuerungen kommunizieren über definierte Schnittstellen mit einer oder mehreren Vermittlungseinrichtungen, den Mobilvermittlungsstellen, über die u.a. auch der Übergang zu anderen Kommunikationsnetzen erfolgt. Die Mobilvermittlungsstellen bilden gemeinsam mit einer Mehrzahl von Datenbanken das Vermittlungssystem (Switching Subsystem) des Mobil-Kommunikationssystems.

Neben den obigen Netzeinrichtungen existieren ein oder mehrere Bedienungs- und Wartungszentren OMC (Operation and Maintenance Centers), die u.a. zum Konfigurieren und Überwachen der Netzeinrichtungen dienen. Überwachungsmaßnahmen und Konfigurierungsmaßnahmen werden hierzu meist von einem der Bedienungs- und Wartungszentren OMC aus ferngesteuert, die üblicherweise im Bereich der Mobilvermittlungsstellen angeordnet sind und die Funktion von Element-Managern haben. Ein Bedienungs- und Wartungszentrum OMC kommuniziert dabei jeweils mit einem Basisstationssystem BSS oder Vermittlungssystem über eine definierte Schnittstelle. Eine weitere Aufgabe des Bedienungs- und Wartungssystems OMC ist die Durchführung des Konfigurationsmanagements (Configuration Management), das neben dem Fehlermanagement einen von fünf Managementfunktionsbereichen darstellt, die die TMN-Prinzipien derzeit identifizieren. Das Konfigurationsmanagement definiert eine Reihe von Diensten, die eine Änderung der Struktur und damit eine Änderung des Verhaltens eines Telekommunikationsnetzes durch den Bediener ermöglichen. Diese Dienste beziehen sich üblicherweise auf Klassen und Instanzen von gemanagten Objekten, die insgesamt die netzspezifische Managementinformationsbasis bilden.

Ein gemanagtes Objekt im Sinne des Konfigurationsmanagements ist eine logische Abstraktion einer Ressource im Mobil-Kommunikationssystem. Hierbei wird unterschieden zwischen hardware-bezogenen gemanagten Objekten, die eine hersteller-spezifische Realisierung einer Funktion beschreiben, und funktionsbezogenen gemanagten Objekten, bei denen es sich jeweils um die Abstraktion einer hersteller-unabhängigen Funktionalität handelt.

Das nachfolgend beschriebene Verfahren ermöglicht die Aktualisierung von insbesondere hersteller-spezifischen Hardware-Informationen am Netzmanagementzentrum NMC ohne die Verwendung von hardware-bezogenen (equipment-related) Objektklassen. Das Verfahren erlaubt dem Netzmanagementzentrum NMC Hardware-Informationen in einem hersteller- und netzelement-unabhängigen Format über Dienste zu empfangen bzw. abzufragen.

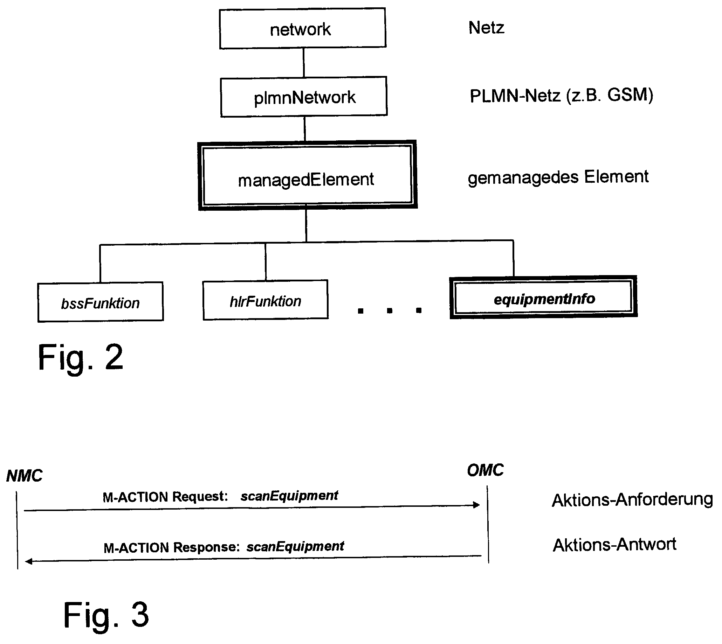

Für die Kommunikation zwischen höheren Ebenen ist ein Einschließungsbaum definiert, der als "High Level Containment Tree" bezeichnet wird und die höheren Management-Ebenen eines öffentlichen Mobilfunk-Netzes (PLMN) darstellt, wie nachfolgend unter Bezugnahme auf Fig. 2 beschrieben wird.

Für die objekt-orientierte Modellierung der OMC-NMC-Schnittstelle ist die Objektklasse managedElement (gemanagtes Element) von Bedeutung, die sowohl funktions-bezogene als auch hardware-bezogene Objektklassen enthalten kann.

Beim vorliegenden Ausführungsbeispiel wird eine Objektklasse "Ausstattungsinformation" bzw. "equipmentInfo" definiert, die folgende Informationselemente enthält:
a) Eine Aktion (Action) "Ausstattung scannen" (scanEquipment), die eine Anforderung des Netzmanagementzentrums NMC an das Bedienungs- und Wartungszentrum OMC zur Übertragung der Hardware-Information modelliert, und
b) ein Attribut Elementzustand bzw. Platinenzustand (board-Status), das - wie nachfolgend erläutert - das Einstecken / Entfernen bzw. den Fehlerzustand eines Hardware-Elements bzw. -Board im Netz modelliert. Das Attribut kann vorzugsweise die Werte verfügbar, fehlerhaft oder entfernt (available, faulty, removed) annehmen.

Vorteilhafterweise reicht für jede Netzregion eine einzige equipmentInfo-Instanz aus.

Das Bedienungs- und Wartungszentrum OMC verwaltet eine Hardware-Tabelle für alle Einheitselemente bzw. Boards aus seiner Management-Region, wobei insbesondere für jedes Board ein Eintrag vorgesehen wird, der folgende Daten enthält:
a) NEy-Type: Gibt den Typ der Netzeinheit an, zu dem die Informationen abgerufen bzw. gemeldet werden. Mögliche Werte sind z.B. für GSM-Netze: btsEquipment, bscEquipment und transcoderEquipment.
b) NEy-Instance: Gibt die Instanznummer der Netzeinheit in einer Netzregion an, z.B. 7.
c) Rack-No: Gibt die Einbaueinheitsnummer bzw. Racknummer innerhalb der aktuellen Netzeinheit an, z.B. 1.
d) Board-Code: Gibt den Inventur-Code des Boards bzw. der betroffenen Platine an, z.B. S5-13579.
e) Board-Name: Gibt den Namen der betroffenen Einheit als Zeichenkette an, z.B. "BBSIG".
f) Board-Nummer: Gibt die Platinen- bzw. Boardnummer im aktuellen Rack an, z.B. 3.
g) RedundantInfo: Gibt an, ob das aktuelle Board bzw. die betroffene Einheit redundant ist oder nicht. Im Fall einer redundanten Einheit ist eine sofortige Fehlerbehebung u.U. entbehrlich.
h) Board-Functions: Beschreibt die Funktionalität des aktuellen Board bzw. der betroffenen Einheit z.B. in Form einer Zeichenkette.

Das Verfahren zur Aktualisierung der Hardware-Informationen am Netzmanagementzentrum NMC besteht zweckmäßigerweise aus zwei Komponenten:
A. Einer Netzmanagementzentrum-Synchronisation nach dem Aufbau der OMC-NMC-Verbindung.
   Zur in Fig. 3 veranschaulichten NMC-Synchronisation des Netzmanagementzentrums sendet das Netzmanagementzentrum NMC nach jedem OMC-NMC-Verbindungsaufbau an jedes regionale Bedienungs- und Wartungszentrum OMC eine M-ACTION-Request bzw. Anforderung scanEquipment, zu der eine M-ACTION-Response bzw. Antwort gehört. Diese sind standardisierte generische CMISE-Prozeduren (CMISE: Common Management Information Service Element).
   Das Bedienungs- und Wartungszentrum OMC bildet aus der eigenen Tabelle der Hardware-Boards den Parameter Aktionserwiederung bzw. "Action reply" der M-ACTION-Response als Sequenz von Einzeleinträgen mit der vorher definierten Struktur (siehe vorstehende Komponenten a) bis h)) und sendet diese ans Netzmanagementzentrum NMC.
   Auch wenn z.B. während des Ausfalls der OMC-NMC-Verbindung neue NEy- bzw. Board-Typen eingeführt wurden, ist keine Änderung der NMC-Applikation erforderlich.
B. Einer permanenten Netzmanagementzentrum- bzw. NMC-Aktualisierung während der Dauer einer OMC-NMC-Verbindung.

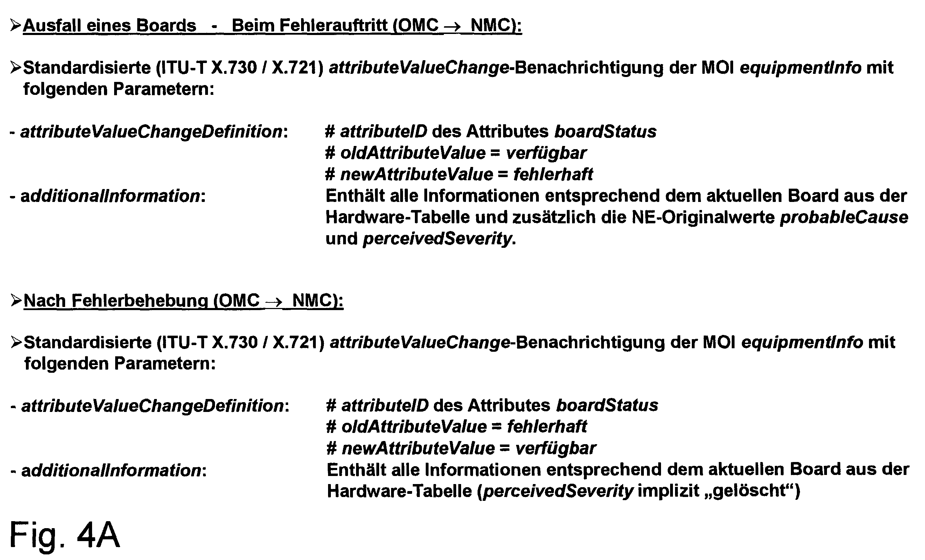

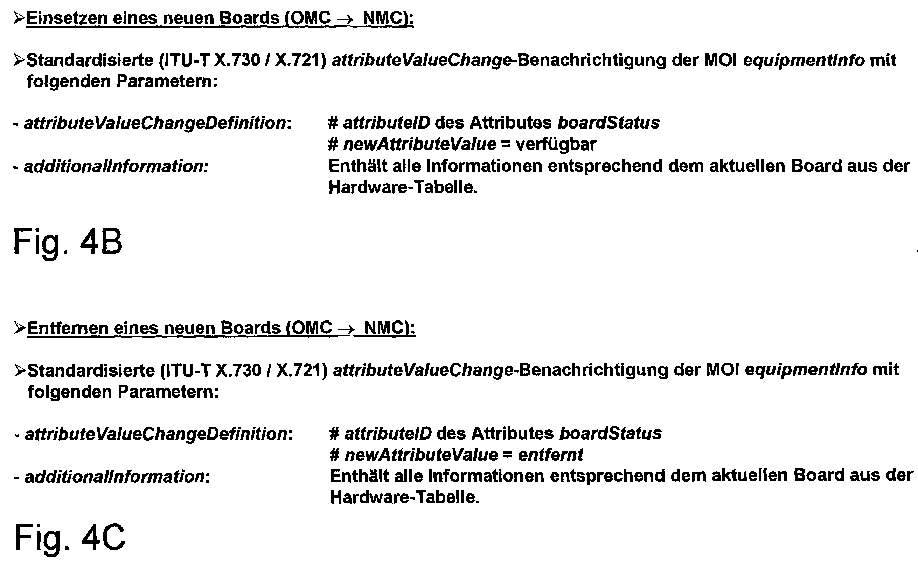

   Fig. 4 skizziert Informationsblöcke für drei Situationen in einem verwalteten Netz.
B1. Im Fall des Ausfalls eines Hardware-Boards wird das Netzmanagementzentrum NMC über den Fehlerzustand jedes Hard-ware-Board informiert, wie folgt (Fig. 4A).
   Wenn ein Fehler in einer Netzeinheit NEy auftritt, sendet das Bedienungs- und Wartungszentrum OMC eine standardisierte Attributwertänderungs-Benachrichtigung "attributeValueChange-Notification" der Management-Objektinstanz MOI Ausstattungsinformation "equipmentinfo" mit folgenden Parametern:
   - Attributwertänderungs-Definition bzw. "attributeValueChangeDefinition" mit der Identifikationsnummer (#attributeID) des Attributes Einheitszustand bzw. boardstatus, mit dem alten Wert des Attributs, der auf verfügbar gesetzt ist (#oldAttributeValue = available), mit dem neuen Wert des Attributs, der auf fehlerhaft gesetzt ist (#newAttributeValue = faulty), und
   - Zusatzinformation (additionalInformation), der alle Informationen entsprechend dem aktuellen Board aus der Hardware-Tabelle und zusätzlich die Netzelement-Originalwerte "wahrscheinliche Ursache" (probableCause) und "wahrgenommene Strenge" (perceivedSeverity) enthält.

   Wenn der Fehler im Netzelement NE wieder behoben ist, sendet das Bedienungs- und Wartungszentrum OMC ebenfalls eine Attributwertänderungs-Benachrichtigung "attributeValueChange-Notification" der Management-Objektinstanz MOI Ausstattungsinformation "equipmentInfo" mit dann den Parametern:
   - "attributeValueChangeDefinition" mit der Identifikationsnummer (#attributeID) des Attributes Einheitszustand, mit dem Wert des alten Attributs, der auf fehlerhaft gesetzt ist (#oldAttributeValue = faulty), mit dem neuen Wert des Attributs, der auf verfügbar gesetzt ist (#newAttributeValue = available), und
   - Zusatzinformation (additionalInformation), der wiederum alle Informationen entsprechend dem aktuellen Board aus der Hardware-Tabelle enthält. Das Feld perceivedSeverity wird auf gelöscht bzw. "cleared" gesetzt.
B2. Im Fall des Einsteckens eines neu eingesetzten Hardware-Boards (Fig. 4B) sendet das Bedienungs- und Wartungszentrum OMC ans Netzmanagementzentrum NMC eine standardisierte Attributwertänderungs-Benachrichtigung "attributeValueChange-Notification" der Management-Objektinstanz MOI Ausstattungsinformation "equipmentInfo" mit den Parametern:
   - "attributeValueChangeDefinition" mit der Identifikationsnummer (#attributeID) des Attributes Einheitszustand, mit dem neuen Wert des Attributs, der auf verfügbar gesetzt ist (#newAttributeValue = available), und
   - Zusatzinformation (additionalInformation), der wiederum alle Informationen entsprechend dem aktuellen Board aus der Hardware-Tabelle enthält.

   Das optionale Feld für den alten Wert des Attributs "oldAttributeValue" muß in diesem Fall nicht benutzt werden.
B3. Im Fall des Entfernens eines eingesetzten Hardware-Boards (Fig. 4C) sendet das Bedienungs- und Wartungszentrum OMC ans Netzmanagementzentrum NMC eine standardisierte Attributwertänderungs-Benachrichtigung "attributeValueChange-Notification" der Management-Objektinstanz MOI Ausstattungsinformation "equipmentInfo" mit den Parametern:
   - "attributeValueChangeDefinition" mit der Identifikationsnummer (#attributeID) des Attributes Einheitszustand, mit dem neuen Wert des Attributs, der auf entfernt gesetzt ist (#newAttributeValue = removed), und
   - wiederum Zusatzinformation (additionalInformation), der wiederum alle Informationen entsprechend dem aktuellen Board aus der Hardware-Tabelle enthält.

   Das optionale Feld für den alten Wert des Attributs "oldAttributeValue" muß in diesem Fall ebenfalls nicht benutzt werden.

## Patentansprüche

1. Verfahren zur Aktualisierung von Informationen in einem objekt-orientierten, hierarchisch aufgebauten Kommunikationssystem mit zumindest zwei Verwaltungsebenen über eine hersteller-unabhängige Schnittstelle zwischen einer hersteller-unabhängigen Managereinrichtung (NMC) und zumindest einer Agenteneinrichtung (OMC), die hersteller-spezifische Hardware-Informationen erlangt und in einem ersten Zustand verarbeitet,
**dadurch gekennzeichnet,**
**dass** über die Schnittstelle hersteller-spezifische Hardware-Informationen in einem hersteller-unabhängigen Format zur Managereinrichtung (NMC) übertragen werden.

2. Verfahren nach Anspruch 1, bei dem eine generische, hersteller-unabhängige Objektklasse (equipmentInfo) zur Beschaffung einer Ausstattungsinformation über die Schnittstelle definiert wird, die als Informationselemente
- eine Aktions-Anforderung (scanEquipment) der Managereinrichtung (NMC) an die Agenteneinrichtung (OMC) zur Anforderung der Übertragung der Hardware-Information und
- eine Attributswertänderungs-Übertragung für den Elementzustand (boardStatus) aufweist.

3. Verfahren nach Anspruch 2, bei dem die Agenteneinrichtung nach der Aktions-Anforderung den Zustand aller Boards einer Netzeinheit (NEy) in ihrem Bereich ermittelt und für die Aktions-Antwort bereitstellt.

4. Verfahren nach Anspruch 2, bei dem die Attributswertänderungs-Übertragung eine momentane Funktionsfähigkeit, ein Einstecken, ein Entfernen und/oder einen Fehlerzustand eines Hardware-Netzelements (NE)modelliert.

5. Verfahren nach einem der Ansprüche 2 oder 4, bei dem die Attributswertänderungs-Übertragung einen Funktionsfähigkeitszustand von einem Fehler eines Hardware-Netzelements (NE)modelliert.

6. Verfahren nach einem der Ansprüche 2, 4 oder 5, bei dem bei der Attributswertänderungs-Übertragung spezielle Informationen über eine Netzeinheit in einem hardware-unabhängigen Format (additionalInformation) übertragen werden.

7. Verfahren nach einem der vorstehenden Ansprüche, bei dem die Attributswertänderungs-Übertragung bei relevanten Zustandsänderungen von der Agenteneinrichtung (OMC) automatisch erfolgt.

8. Verfahren nach einem der vorstehenden Ansprüche, bei dem die Übertragung über die Schnittstelle netzelement-unabhängig ist.

9. Verfahren nach einem der vorstehenden Ansprüche, bei dem über die Schnittstelle hersteller-spezifische Hardware-Informationen über Agenteneinheiten (BSS) der Agenteneinheit (OMC) zur Managereinrichtung (NMC) übertragen werden.

10. Kommunikationssystem, insbesondere mit Einrichtungen zum Ausführen eines Verfahrens nach einem vorstehenden Anspruch, das
- zumindest zwei objekt-orientierte, hierarchisch aufgebaute Verwaltungsebenen mit einer hersteller-unabhängigen Managereinrichtung (NMC) und zumindest einer Agenteneinrichtung (OMC), die hersteller-spezifische Hardware-Informationen erlangt und in einem ersten Zustand verarbeitet, und
- eine hersteller-unabhängige Schnittstelle zwischen diesen aufweist,
**gekennzeichnet durch**
eine Austauscheinrichtung in der hersteller-unabhängigen Managereinrichtung (NMC) und der/den Agenteneinrichtung(en) (OMC) zum Austauschen hersteller-spezifischer Hardware-Informationen.

11. Kommunikationssystem nach Anspruch 10, bei dem die Schnittstelle eine hersteller-unabhängige Schnittstelle zwischen einem Netzmanagementzentrum (NMC) und zumindest einem Bedienungs- und Wartungszentrum (OMC) eines Funk-Kommunikationsnetzes ist.
